# EUROPEAN PATENT SPECIFICATION

(11) **EP 2 640 610 B1**
(45) Date of publication and mention of the grant of the patent: **03.12.2014**
(21) Application number: 11776788.9
(22) Date of filing: 31.10.2011
(51) Int. Cl.: B60R 19/48, B60R 19/40, B60R 5/04

(54) **IMPACT STRUCTURE**
AUFPRALLSTRUKTUR
STRUCTURE D'IMPACT

(30) Priority: 16.11.2010 SE 1051203
(43) Date of publication of application: 25.09.2013
(73) Proprietor: Clean Motion AB, 443 38 Lerum (SE)
(72) Inventor: FOLKESSON, Göran, S-443 38 Lerum (SE); FOLKESSON, Hans, S-443 32 Lerum (SE)
(74) Representative: Somlo, Tommy
(86) International application number: PCT/EP2011/069081
(87) International publication number: WO 2012/065837

(56) References cited:
- WO-A1-90/14253
- DE-A1- 4 239 120
- DE-A1- 19 738 694
- DE-A1- 19 941 939
- DE-C1- 10 124 375
- DE-U1- 29 508 150
- GB-A- 1 067 740
- US-A1- 2009 195 030
- US-B1- 6 227 583

## Description

### Field of the Invention

The present invention relates to passenger safety for vehicles. Especially, the invention relates to an impact structure for a motor vehicle. In particular, the present invention relates to an impact structure comprising an impact receiving portion and a storage portion, wherein the impact structure, when arranged in a vehicle, is movable between at least a retracted position and an extended position in relation to a body structure of the vehicle. The invention relates also to a vehicle comprising an impact structure.

### Background of the Invention

Lately, there have been a lot of activities within vehicle industry, in particular the car industry, for providing more environmentally friendly vehicles that produce less harmful impact on the environment than comparable conventional vehicles. That is, the industry has been interested in developing vehicles, which contribute to decrease of total energy cost used by the vehicles.

One possibility to decrease the total energy cost is to produce lighter vehicles, which require less energy to operate. One solution for decreasing the weight of a vehicle is to make it smaller than conventional vehicles, and/or use other lighter materials. However, a problem with small vehicles may be that a size of a storage space is restricted, or in worst case the storage space may be omitted. Moreover, passengers in a smaller vehicle are more exposed and vulnerable in case of a collision compared to passengers in a larger vehicle.

One alternative possibility to decrease the total energy cost is to improve the power systems of larger vehicles such that they use less energy than a conventional similar vehicle. In addition, since the air pollution per kilometre for a vehicle is substantially independent of the number of passengers in the vehicle, the vehicles may be constructed to accommodate as many passengers as possible at the sacrifice of storage space in form of a baggage compartment or trunk. Thus, a problem with such vehicles is very likely, similarly to the smaller vehicles, that the size of the storage space is restricted. Further, a smaller storage space implies generally that the passengers are more exposed and vulnerable in a rear collision.

Hence, there is a need for new types of storage spaces in such vehicles, and new devices for improving passenger safety for such vehicles.

### Summary of the Invention

In view of the above-mentioned, a general object of the present invention is to supply said needs. The invention is based on the insight that by transferring the impact load from weaker parts of the vehicle to a load bearing structure, impact damage on the vehicle maybe reduced. The invention is also based on the insight that an impact energy absorbing means may be provided to absorb initial energy from a collision before the remaining energy is transferred to a body structure of the vehicle.

According to a first aspect of the invention an impact structure adapted to be arranged in a vehicle to take up an impact load is provided, the impact structure comprises an impact receiving portion and a storage portion, wherein the impact structure, when arranged in a vehicle, is movable between two positions, a retracted position and an extended position, in relation to a body structure of the vehicle, wherein the impact structure, for cooperation with guiding means on the body structure of the vehicle has guiding means for guiding the impact structure between said two positions, wherein the impact structure is lockable in said two positions,
wherein, when the impact structure is in the retracted position, said storage portion is adapted to transfer an impact load directly to a load bearing section of the body structure of the vehicle, and
wherein, when in the extended position, the impact structure is locked in that position by locking means, cf. DE 295 08 150 U1. The present invention is distinguished therefrom by the characterising features of present claim 1.

Thus, if the impact structure is in the extended position when be subject to a collision, the impact structure will moved towards the retracted position, and during this movement some of the received impact energy will initially be absorbed by the impact energy absorbing means. The reduced impact energy is then transferred to a body structure of the vehicle when the impact structure has reached the retracted position.

In an exemplary embodiment, the impact structure may be manually movable between said two positions and, suitably, manually lockable in said two positions. Thus, a driver may, before starting the vehicle, move the impact structure to the extended position, thus having it in a "ready" state, in case a collision would occur. Alternatively, the impact structure may be automatically movable, as will exemplified later in this description.

A retracted position is intended to mean a position in which the impact structure is fully retracted if nothing else is indicated. An extended position is intended to mean a position of the impact structure, in which the distance between the impact receiving portion and the vehicle is larger compared to the distance when the impact structure is in the retracted position. Suitably, the distance is increased in a longitudinal direction of the vehicle. An impact structure is intended to mean a structure of the vehicle that is intended to take care of an impact in some way. An impact receiving portion is intended to mean a portion that is intended to receive an impact. A body structure of the vehicle is intended to mean a body, bodywork, or coach work of a vehicle, or an analogous portion of a monocoque construction of a vehicle.

Such an impact structure is advantageous, since it makes it possible to combine an impact structure with storage space. In addition, the impact structure improves passenger safety in vehicles where the distance between the impact receiving portion of the impact structure and the space within the vehicle that is intended for passengers is relatively short. The short distance may depend either on that the vehicle is generally small or on that the storage space of the vehicle is replaced with passenger accommodation resulting in non-existing or small storage space, in comparison with a storage space of a conventional vehicle, between the passenger accommodation and the impact structure. By having impact energy absorbing means that absorb part of the energy under impact load and transfer remaining energy to a load bearing section of a body structure, passenger safety is increased. The major part of the impact force may be received by the load bearing section of the vehicle instead of the impact structure. Since the impact force is transferred to a load bearing section of the vehicle, the vehicle can be pushed away from the impact position. Hence, damage may be decreased.

There are various conceivable impact energy absorbing means that may be used for absorbing initial energy at a collision. For instance, it may be a deformable mechanical structure which at a collision is deformed, the deformation thus consuming energy, before the impact load is transferred to a body structure of the vehicle. Instead of deformable structures, hydraulic or pneumatic alternatives are also conceivable. Some example embodiments of the impact energy absorbing means are presented in the following.

According to at least one example embodiment, said impact energy absorbing means comprises a hydraulic or pneumatic shock-absorber, such as an oleo or gas strut, wherein said shock-absorber is adapted to absorb energy under an impact load, over a predetermined value, to allow the impact structure to move from the extended position towards the retracted position under impact energy absorption, wherein said shock-absorber is connected directly or via the guiding means to the body structure of the vehicle and adapted to transfer directly or via the guiding means the impact load to the load bearing section of the body structure of the vehicle during movement of the impact structure from the extended position towards the retracted position.

The storage portion may be used as a baggage compartment, as a storage space for a range extender, a battery unit, or the like. Since the impact structure is movable between at least a retracted position and an extended position in relation to a body structure of the vehicle, and it is intended that the impact structure may be in the extended position during ride, a user may either transport goods with the impact structure in the retracted position or in the extended position. Thus, the impact structure may support relatively voluminous goods in the extended position. In the retracted position the transported goods may be covered by the vehicle and thus protected for precipitation such as rainfall or snowfall. An extended position is not necessarily the most extended position of the impact structure. Instead, an extended position may denote any position of the impact structure that is not the fully retracted position.

In an exemplary embodiment, said impact structure is ejectable to the extended position in response to a signal indicating a probable approaching impact with the vehicle or the impact structure. The signal may, for instance, be generated by a sensor detecting said probable approaching impact.

The word ejectable is intended to mean that the impact structure can be moved rapidly or can be expelled. The signal indicating a probable approaching impact may be a signal from a sensor, such as a parking sensor, or a GPS sensor, a signal from a radar, a signal from a system for direct communication between the vehicles, a signal from a system of the vehicle for automatic detection of adjacent vehicles, or a signal indicating that a driver slams on the brakes. A probable approaching impact is intended to mean that an impact is probable to occur based on a distance or a velocity of an approaching vehicle, or alternatively based on that a driver slams on the brakes. If a driver suddenly slams on the brakes, there is always a risk for an impact, since there is a risk that a driver in a vehicle behind may react too late and consequently run into the vehicle which stops suddenly.

Such an ejectable impact structure is advantageous, since it allows increasing the distance between the impact receiving portion and the body structure of the vehicle. Hence, the safety of the passengers is increased. Further, such an impact structure facilitates possible repair work after an impact, since at least a major part of expected damage will be on the impact structure itself and not the rest of the vehicle. Thus, the damage may be repaired in most cases by changing merely the impact structure.

In an exemplary embodiment, said locking means are adapted to prevent the impact structure from being moved to the retracted position, when the impact structure has been ejected.

Such locking means are advantageous, since they ensure that distance between the impact structure and the vehicle is retained when the impact load does not exceed a predetermined limit value.

According to the present invention, the locking means provides the impact structure with energy absorbing means, when the impact load exceeds the predetermined value.

Said predetermined limit value of impact load is suitably set based on what type of vehicle the impact structure is or will be mounted on. For instance, a vehicle for transporting goods may be allowed to take a larger impact than a passenger-carrying vehicle. Likewise, other factors, such as size or weight, may be relevant when setting said predetermined value.

In an exemplary embodiment, said locking means comprises a matching pair of a latch and a recess, which are in engagement with each other for preventing the impact structure from moving to the retracted position. However, when an impact load over said predetermined value is received by the impact structure, the latch and/or the recess-defining structure is/are deformed, thereby absorbing some of the energy from the impact. The remaining energy carried by the impact structure will (when the impact structure has reached the retracted position) be transferred from the storage portion of the impact structure to the body structure of the vehicle.

Either of the latch or the recess may be either arranged on the impact structure or the vehicle, as long as the intended function of the locking means is achieved.

In an exemplary embodiment, said load bearing section of the body structure comprises a floor of the vehicle, wherein said impact energy absorbing means is adapted to transfer directly or via the guiding means said impact load to said floor.

In an exemplary embodiment, said guiding means comprises a pair of guiding means, which matches corresponding guiding means on the vehicle, for moving said impact structure between said retracted and extended position.

The guiding means may for instance be rails.

In an exemplary embodiment, said storage portion of said impact structure is at least partly located between two wheels of the vehicle.

Such an impact structure is advantageous, since it utilizes space of the vehicle, which otherwise may be unused, as a storage space.

In an exemplary embodiment, said impact structure further comprises a drive device for ejecting said impact structure to said extended position in response to said signal indicating a probable approaching impact.

Such an impact structure is advantageous, since it increases the distance between the impact receiving portion and the passengers in the vehicle. Thus, passenger safety is increased. In addition, since the distance between the vehicle and the impact receiving portion is increased the damage on the vehicle due to the impact is decreased.

In an exemplary embodiment, said drive device comprises biasing means.

In an exemplary embodiment, said biasing means comprises at least one gas spring.

In an exemplary embodiment, said drive device comprises a pyrotechnical inflator and/or an airbag.

Such a drive device is advantageous, since it is light and reliable. Thus, the ejectability of the impact structure is ensured. A pyrotechnical inflator may inflate an airbag or another device for ejecting the impact structure.

In an exemplary embodiment, said impact receiving portion and said storage portion of the impact structure are made of a sandwich composite.

Such an impact structure is advantageous, since sandwich composite has a low density and high strength, which result in an impact structure which has both a low weight and high strength.

In an exemplary embodiment, said impact structure is further connected with at least one seat belt of the vehicle such that a retractor of the seat belt is connected to the impact structure, wherein said seat belt is retracted into the retractor when the impact structure is moved to the extended position as a response to said signal indicating a probable approaching impact.

Such an impact structure is advantageous, since the seat belt is automatically tensioned when a probable approaching impact is detected. Thus, passenger safety is increased.

According to a second aspect of the invention, there is provided a vehicle comprising an impact structure according to the first aspect of the invention, and in any of its exemplary embodiments.

Such a vehicle is advantageous, since it allows a battery unit, a range extender, or the like to be protected in case of an impact. In addition, such a vehicle increases passenger safety and decreases impact damage.

In an exemplary embodiment, as the impact structure is movable between at least a retracted position and an extended position in relation to a body structure of the vehicle, an interior of said storage portion is accessible from outside the vehicle in the extended position of the impact structure.

Further, said storage portion is adapted to transfer an impact load applied to the impact receiving portion to said load bearing section of the body structure of the vehicle at least in said retracted position.

Such a vehicle is advantageous, since it increases passenger safety and decreases impact damage. Further, the vehicle has the advantages discussed in relation to the first aspect of the invention.

The present invention will become more apparent when studying the appended claims and the following description. The skilled addressee realizes that different features of the present invention may be combined to create embodiments other than those described in the following, without departing from the scope of the present invention defined by claim 1 and claim 12.

### Brief Description of the Drawings

The various aspects of the invention, including its particular features and advantages, will be readily understood from the following detailed description and the accompanying drawings, in which:
Fig. 1 is a side view of an embodiment of an impact structure according to the invention arranged in a vehicle in a retracted position;
Fig. 2 is a rear view of the impact structure in fig. 1 arranged in a vehicle;
Fig. 3 illustrates an embodiment of an impact structure according to the invention in an extended position;
Fig. 4a illustrates an alternative embodiment of an impact structure according to the invention;
Fig. 4b is a magnification of a detail of the embodiment in fig. 4a;
Fig. 5a and 5b illustrates the functionality of the embodiment of an impact structure according to the invention in fig. 4a, when a probable impact is approaching; and
Fig. 6 illustrates an alternative embodiment of an impact structure according to the invention.

### Detailed Description of Exemplary Embodiments

Throughout the whole description words as upper, lower, above, and below are intended to have their ordinary meaning when the impact structure is arranged in a vehicle.

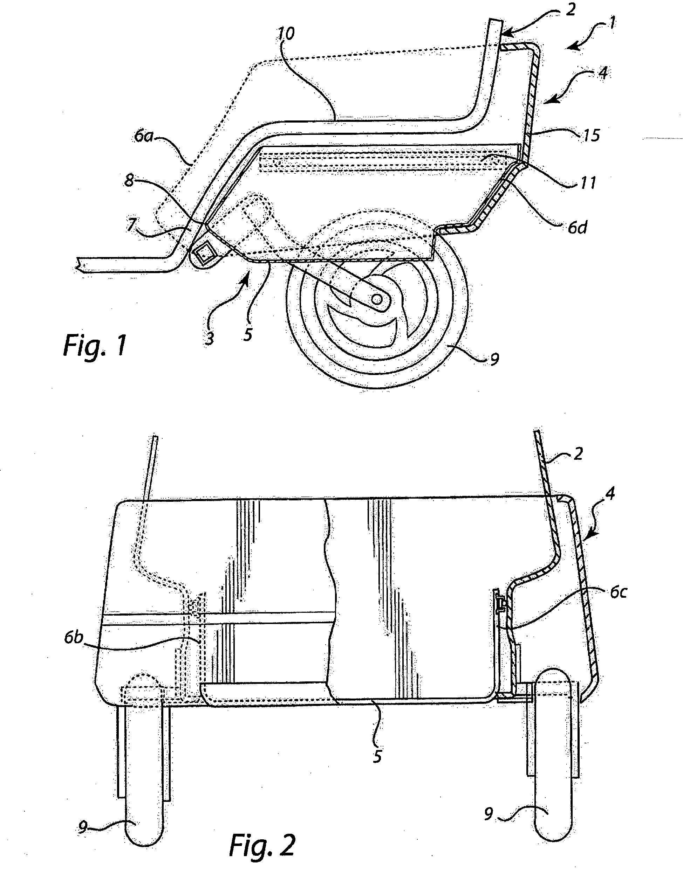

In figures 1 and 2, an embodiment of an impact structure 1 according to the invention, arranged in a vehicle 2, is illustrated as a side view and as a rear view, respectively. Figure 1 is a cross-sectional view, and figure 2 is partly a cut-away view.

The impact structure 1 comprises a storage portion 3 and impact receiving portion, herein exemplified as a bumper portion 4. The storage portion 3 is roughly box-shaped and comprises a bottom member 5, and side members 6a-d. The storage portion 3 is arranged partially between the wheels 9 of the vehicle 2 and below a seat 10 of the vehicle.

The forward side member 6a, which faces the load-bearing section 7 of the vehicle 2 when the impact structure 1 is arranged in a vehicle 2, is formed such that at least a part of the side member is in contact with the load bearing section 7 of the vehicle 2 when the impact structure 1 is in the fully retracted position. In the illustrated embodiment, the forward side member 6a is angled and the portion of the forward side member 6a forming a tip portion 8 is in contact with the load bearing section 7 of the vehicle 2. The form of the rear side member 6d, which is opposite to the forward side member 5, is similar to a form of an adjacent part of the bumper portion 4. Thus, a volume of the storage space within the storage portion 3 is as large as possible under the prevailing circumstances. Since the storage portion 3 abuts the bumper portion 4, an impact load applied on the bumper portion 4 can be transferred to the storage portion 3. The side members 6b, 6c between the forward side member 6a and the rear side member 6d extend substantially vertically from the bottom member 5.

The bumper portion 4 comprises a deformation zone 15 which extends slightly, for instance 3 cm, from the vehicle 2. The bumper portion 4 extends round a rear portion of the vehicle 2 and surrounds the rear side member 6d and the side members 6b, 6c between the forward side member 6a and the rear side member 6d. The bumper portion 4 is intended to receive the impact load from another vehicle colliding with vehicle 2. The deformation zone 15 of the bumper portion 4 absorbs the impact energy in case of a low-speed impact. That is, in this example embodiment, when the relative velocity of the colliding vehicles is lower than, for instance, 5 km/h. The corresponding impact load depends on the weight, m, of the vehicle 2. In this connection, it should be noted that all numerical values presented in this disclosure are just illustrative examples, and other numerical values are equally conceivable. Thus, any numerical values of velocities, accelerations, impact loads, forces, etc. presented in this disclosure are non-limiting and may be adjusted according to different circumstances, requirements and/or types of vehicles.

The impact structure 1 is arranged in the vehicle 2 using a pair of guiding means, herein exemplified as rails 11. Thus, the impact structure 1 can be moved between a retracted and an extended position. In the extended position a distance between the bumper portion 4 and the vehicle 2 is increased in a longitudinal direction of the vehicle. A longitudinal direction of the vehicle is intended to mean a direction extending between the rear and the front of the vehicle. The rails 11 on the impact structure 1 match corresponding rails 11 on the vehicle 2. The rails 11 on the vehicle 2 are fixed to each rear side portion of the vehicle 2 as is illustrated in figure 2.

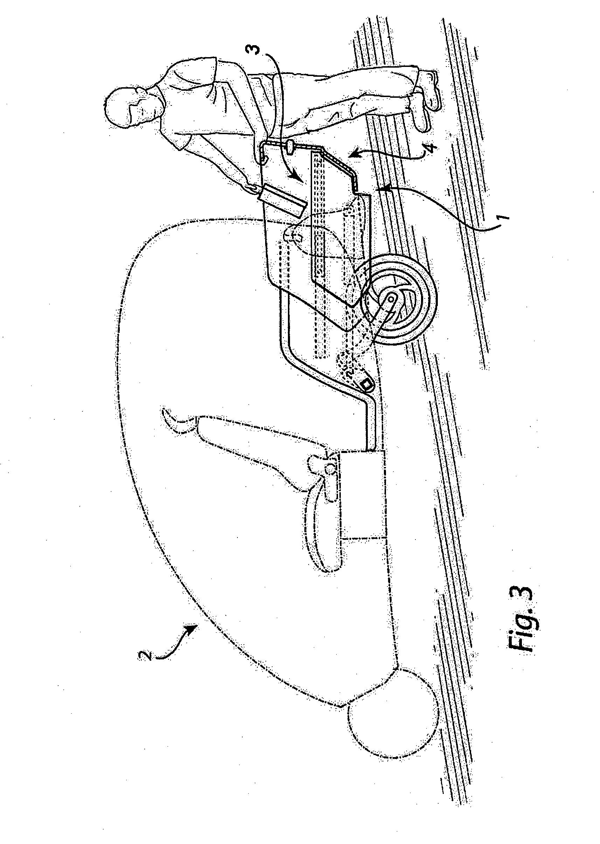

The impact structure 1 may be provided with a handle (not shown) for allowing a user to move the impact structure 1 from the retracted position to the extended position. In the extended position the storage portion 3 is accessible from outside the vehicle 2, as is illustrated in figure 3. The storage portion 3 may be used for transport of objects, such as luggage. Also, a battery pack or a range extender may be arranged in the storage portion 3. A range extender is generally an internal combustion engine that recharges a battery.

If there is a need to transport objects that are larger than a volume receivable by the impact structure 1 in the retracted position, the impact structure 1 in figure 3 can intentionally be left in the extended position during driving. Thus, the impact structure 1 provides the vehicle 2 with an adaptive storage space. Suitably, the impact structure 1 is provided with some kind of locking means for safely retaining the impact structure 1 in an extended position during driving.

Suitably the impact structure 1, that is the storage portion 3 and the bumper portion 4, is made of a high-strength material which has a rigidity that is high enough such that the impact structure 1 will remain substantially undeformed even in collisions in which an applied impact load is, for instance, at least 30g*m, where m is the mass of the vehicle 2. Such an impact load corresponds to a relative velocity of the colliding vehicles (or one of the colliding vehicles) of approximately more than 15 km/h. Generally, impact loads corresponding to accelerations that are higher than 30g will result in serious personal injuries. In other words, a material structure of the impact structure 1 results in a strength of the impact structure 1 that suitably withstands an impact load which is at least 30g*m, where m is the mass of the vehicle 2. Preferably, the impact structure may withstand even higher impact loads, which correspond to a relative velocity of higher than 20 km/h. Suitably, the impact structure 1 is made of a sandwich composite, such as fibre reinforced plastic. The sandwich composite is of a conventional type comprising a core of for instance cell structured foam or polystyrene and a skin of glass fibre or carbon fibre. The sandwich composite may comprise reinforcing straps of carbon fibre or Kevlar. Alternatively, the impact structure 1 may be made of a structure of a high-strength metallic material, or a high-strength corrugated aluminium structure. Such structures and the construction of them are well known by a person skilled in the art. Still alternatively, the impact structure 1 may be made of a combination of the materials or material structures above. In an alternative embodiment, merely the storage portion 3 of the impact structure 1 may be made of a material structure or a material having one or several of the properties described above. Suitably, the impact structure 1 or the storage portion 3 has a rigidity that is higher than a rigidity of the load bearing section 7 of the vehicle 2.

The impact structure 1 is arranged in a vehicle 2 as is illustrated in the figures. When a high-speed, that is higher than, for instance, 15 km/h relative velocity, rear collision with the vehicle 2 occurs, that is another vehicle runs into the vehicle 2, the impact load will firstly be received by the bumper portion 4. Impact energy absorbing means (not shown), such as a deformable mechanical structure or a hydraulic or pneumatic shock-absorber is adapted to take up impact energy initially, when the impact structure moves from the extended position. When the impact structure is in the retracted position, the impact load is transferred to the load bearing section 7 of the body structure of the vehicle 2 by/via the storage portion 3. After the impact load has been transferred to the load bearing section 7 of the vehicle 2, the vehicle 2 will be pushed away from the place where the impact occurs. The load bearing section 7 may be a floor of the vehicle or a side structure, such as a side beam.

If the vehicle 2 comprising the impact structure 1, is pushed against a heavier vehicle in front of it or against substantially rigid material, such as a rock or a tree, during acceleration of the vehicle 2 from the place where the impact occurs or if the collision is a multiple collision, the storage portion 3 of the impact structure 1 may function as a safety cage for the passengers. Since the impact structure 1 is made of a material structure having such a high strength, a front end of the vehicle 2 may be deformed, while impact energy is absorbed, before the impact structure 1 is deformed.

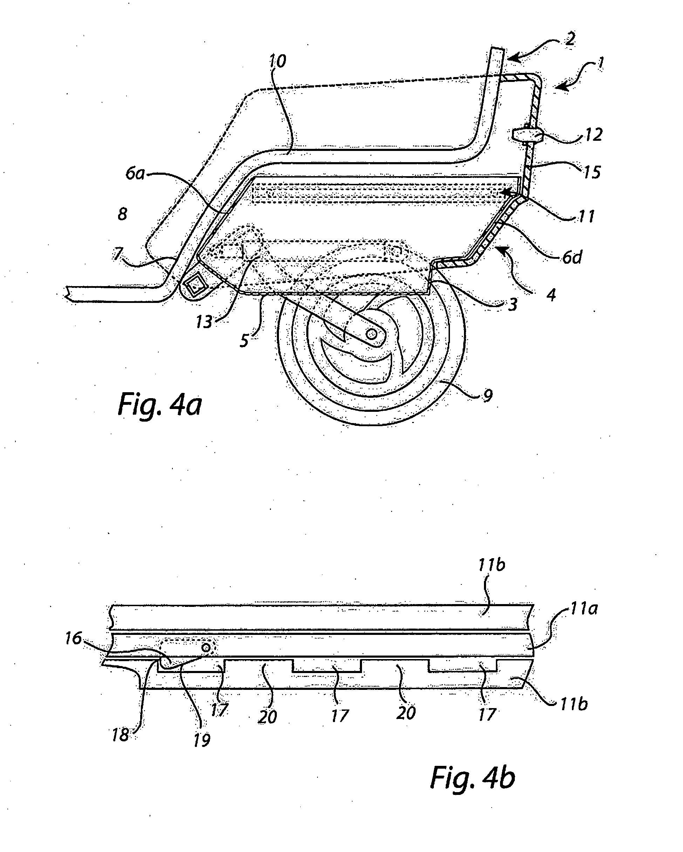

Figures 4a and 4b illustrate schematically an alternative embodiment of the impact structure 1. In addition to the general features of the embodiment in figure 1, this embodiment of the impact structure 1 comprises additional features. The impact structure comprises a sensor 12. The sensor 12 is arranged on the surface of the bumper portion 4 and provides the impact structure 1 with a sensor signal when the sensor has detected an object that may cause a probable approaching impact. By arranging the sensor on the impact structure, both the impact structure and the sensor are replaced, if required, after a collision. Thus, the electrical interconnections between the sensor and a drive device of the impact structure are intact and operable as soon as the impact structure is replaced and need therefore not be inspected or repaired. Thus, such an impact structure facilitates the repair work needed, if any, after a collision.

Suitably, the sensor 12 is a proximity sensor of a type known by a person skilled in the art. The sensor 12 may be the same sensor as is used by the vehicle 2 as a reverse parking sensor or an additional sensor. If a reverse parking sensor is used, the drive device may be inactivated automatically or manually, when the vehicle 2 is being parked for preventing ejection of the impact structure 1 during parking. With inactivated is meant that the drive device may not be activated.

Further, the impact structure 1 may comprise a drive device, herein exemplified as comprising two gas springs 13. One end of each gas spring 13 is fixed to a holder on the load-bearing section 7 of the vehicle 2 and the other end is fixed to a respective side member 6b, 6c of the storage portion 3 such that the gas springs 13 extend along the longitudinal extension of the side members 6b, 6c. The gas springs 13 allow the impact structure 1 to be ejected to an extended position. Instead of gas springs 13, the drive device may comprise any type of biasing means, such as a mechanical spring. The gas springs 13 or other biasing means are compressed when the impact structure 1 is in the retracted position and will be released as a response to the sensor signal using suitable releasing means, such as a magnetic catch.

The gas springs 13 may also act as shock-absorbers 13 adapted to absorb energy under an impact load, over a predetermined value, to allow the impact structure 1 to move from the extended position towards the retracted position under impact energy absorption. The gas springs 13 are further adapted to transfer impact load to the load bearing section 7 of the body structure during movement of the impact structure 1 from the extended position towards the retracted position. Thus, in at least one example embodiment the gas springs 13 have both the energy absorbing function and the above described ejecting function. In an alternative embodiment, the gas springs 13 do not have the ejecting function, but only the energy absorbing function. In another alternative embodiment, the gas springs 13 do not have the energy absorbing function, but only the ejecting function.

Furthermore, reference numeral 13 may in alternative embodiments, depict shock-absorbers 13 in general (thus not necessarily being limited to gas springs; e.g. oleo struts are conceivable as well) which are adapted to absorb energy under an impact load and to transfer impact load to the load bearing section 7 of the body structure, in a corresponding manner as described above.

Figure 4b is a magnification of the rails 11 in figure 4a. Each of the rails 11 a on the impact structure 1 is further provided with locking means in form of a hinged latch 16, which matches recesses 17 provided on the rails 11b on the vehicle. Each of the rails 11 b on the vehicle comprises a number of recesses 17 positioned with regular distances along a longitudinal extension of each rail 11 b. The hinged latch 16 comprises a substantially straight side 18 and an inclined side 19. The hinged latch 16 is arranged such that the straight 18 side engages with a recess 17 of the rail 11 b on the vehicle and hinders the impact structure 1 from moving against a retracted position. The inclined side 19 allows the impact structure 1 to move smoothly and unhindered to an extended position from a retracted position, since the latch 16 can not engage with a recess 17 on a rail 11 b on the vehicle 2 when the latch 16 and the rail 11 a on the impact structure 1 is moved together with the impact structure 1 towards an extended position.

In other words, the latch 16 and the matching recesses 17 locks the impact structure 1 in an extended position and hinders the impact structure 1 from moving from an extended position towards a retracted position unintentionally without applying a great force on the impact structure 1, and allows the impact structure 1 to be moved from the retracted position to the extended position smoothly and unhindered. If the impact force is high enough the impact structure 1 will be urged towards the vehicle 2. Thus, the material of the portion 20 of the rails 11 b between the first recess 17 with which the latch 16 is in engagement with and an adjacent second recess 17 in a direction towards the vehicle 2 will be destroyed, while at least a part of the impact energy is absorbed. Thereafter, if the entire impact energy is not absorbed, the material between the second recess and an adjacent third recess will collapse, and subsequently the material between the other subsequent recesses will be destroyed until either the entire impact energy is absorbed, or the impact structure 1 is in the fully retracted position. In other words, the rail 11 b with the recesses 17 will function as energy absorbing means in cooperation with the latch 16, when material between the recesses 17 is destroyed sequentially. When the material of all the portions 20 between the recess 17 with which the latch 16 is initially in engagement with and the vehicle 2 has been destroyed, the impact structure 1 will be in the fully retracted position and the remaining part of the impact load which has not yet been absorbed will be transferred to the load bearing sections 7 of the vehicle 2. Thereafter, the vehicle 2 will be pushed away from the place where the impact occurs as is described above in connection to the embodiment in figure 1. However, if the vehicle is a relatively light vehicle, the vehicle may be pushed away from the colliding vehicle even before the impact structure 1 has reached its fully retracted position. The material of the rails 11 will be destroyed when the relative velocity of the colliding vehicles is about 5 km/h. That is, when the acceleration due to the impact load is close to 5g times the weight m of the vehicle 2. Such rails 11 are suitable, since the passengers will not be exposed to loads that will result in permanent injuries, such as whiplash injuries, if the loads are lower than 5g.

If the colliding vehicle 14 will hit the vehicle 2 at a side of the rear part, the vehicle 2 will similarly to the description above be pushed away from the place where the impact occurs in a lateral direction and thus away from the colliding vehicle 14.

For being able to manually move the impact structure 1 from an extended position to a retracted position, the impact structure 1 is provided with means (not shown) for releasing the latch 16 from engagement with the recess 17 and for preventing the latch 16 from engaging with any recess 17 when the impact structure 1 is moved from an extended position towards a retracted position. Such means may be, for instance, a spring or a wire that extends between the latch and a member for controlling the means for releasing the latch 16. Suitably, the handle may comprise the member for controlling the means for releasing the latch.

The latch 16 may also be used for locking the impact structure 1 in the extended position during driving, if there is a need to transport objects that are so large that they cannot be accommodated within the storage portion 3 when the impact structure 1 is in the retracted position, as is described earlier.

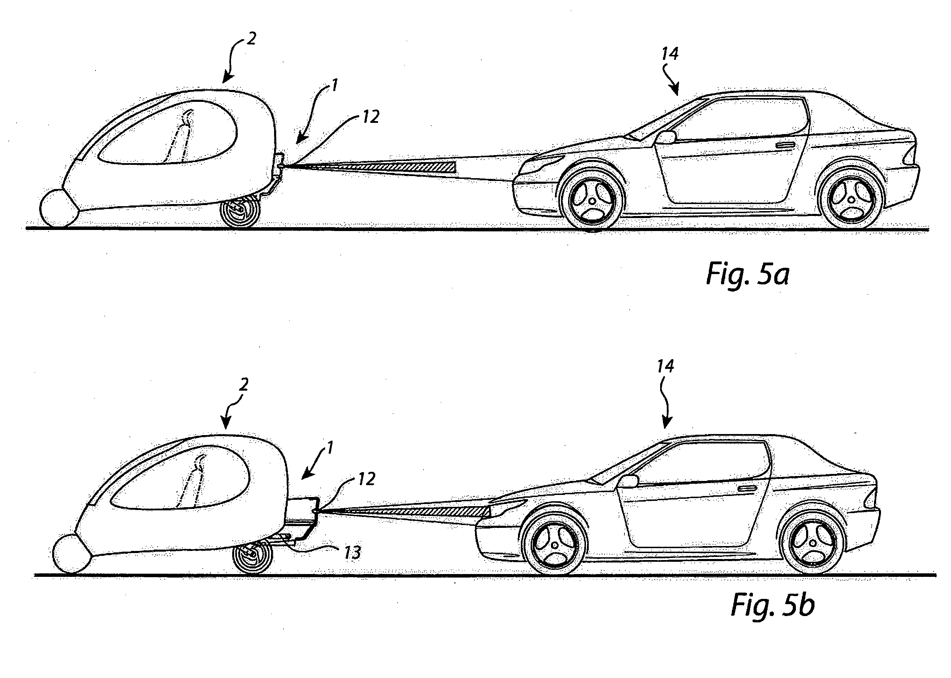

Figures 5a and 5b illustrates schematically the functionality of the embodiment of the impact structure 1 comprising a sensor 12, when a probable impact is approaching.

In figure 5a the impact structure 1 is in the retracted position and the sensor has not yet detected the approaching vehicle 14, since the vehicle 14 is not within a range of the sensor 12 in which the impact structure 1 is ejected. The range of the sensor 12 is indicated in figures 5a and 5b with a hatched area. Typically a range of the sensor 12 is 1.5 metres in a direction which is substantially perpendicular to the surface on which the sensor 12 is arranged.

In figure 5b the vehicle 14 has reached the range of the sensor 12 and the drive device has been activated. Thus, the impact structure 1 is ejected towards its most extended position as a response to a sensor signal. In the extended position the impact structure 1 will be locked by the latch 16. If the impact will happen during ejection of the impact structure 1 the latch 16 will hinder the impact structure 1 from moving to the retracted position, as is described above, if the impact load is lower than approximately 10 kN. If the impact load is higher, impact energy corresponding to an acceleration in a range 5g-10g will be absorbed during movement of the impact structure 1 from the extended position towards the retracted position due to the impact load. Thereafter, if the total impact energy is not absorbed, the vehicle 2 will be pushed away from the place where the impact is occurring. If there is another vehicle in front of the vehicle 2, and the vehicle 2 runs into that vehicle, the front end of the vehicle 2 will be deformed during absorption of the impact energy. During such a deformation the impact structure 1 or the storage portion 3 of the impact structure will function as a safety cage for the passengers in the vehicle. If the total impact energy is not absorbed by the deformation of the front end, the floor of the vehicle will be deformed and thereafter the impact structure 1 or the storage portion 3.

If the impact is for some reason avoided, the impact structure 1 may be moved to the retracted position by a user by using the means for releasing the locking means. Also, if the impact results in minor damage, if any, the impact structure 1 can be moved back to the retracted position and needs not necessarily be changed. If, on the contrary, the impact results in considerable damage, the impact structure 1 is, due to its construction, easy to replace with a new one.

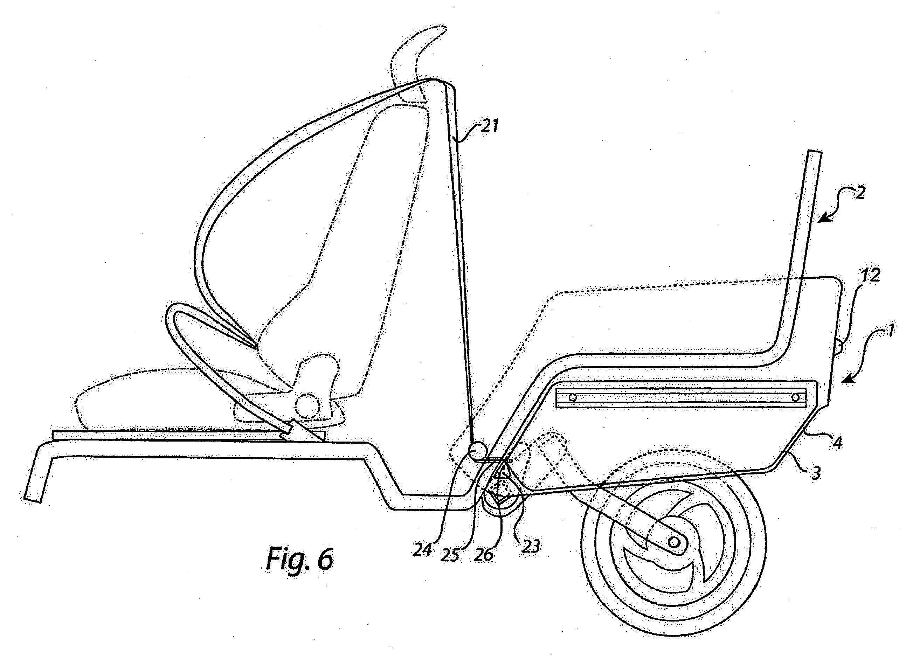

Figure 6 illustrates highly schematically an alternative embodiment of the invention, in which the impact structure 1 is connected with at least one seat belt 21 of the vehicle 2 such that a retractor 24 of the seat belt 21 is connected to the impact structure 1 using a wire 25 and a wire fastening means 26, such as a wire lock 26. Thus, when the impact structure 1 is ejected to the extended position as a response to a sensor signal, the wire 25 will be tensioned. The tensioning of the wire 25 will retract the belt 21 into the retractor 24, until the wire tension force reaches a predetermined desired limit value, suitably 100 N or alternatively 200 N, at which the wire fastening means 26 is configured to break down. Thereafter, the wire fastening means 26 will break down and the tension of the wire 25 will decrease preventing further retraction of the seat belt 21 into the retractor 24. Since the retractor 24 prevents acceleration or spooling of the seat belt 21 out from the retractor 24, the achieved tension of the seat belt 21 will be maintained. Consequently, the seat belt 21 is tensioned when the impact structure 1 is ejected. The wire fastening means 26 may be any other suitable fastening means, such as a plastic screw that is configured to break down at a desired limit force. Alternatively, a portion of the wall 6a of the storage portion 3 may be configured to release the wire fastening means 26 at a desired limit force.

In the embodiment in figure 6, the drive device comprising gas springs 13 is replaced by a drive device comprising a pyrotechnical inflator (not shown) and an airbag 23.The airbag 23 is inflated by the pyrotechnical inflator, which is activated as a response to a sensor signal. The airbag 23 is arranged between the load bearing section 7 of the vehicle 2 and the forward side portion 6a of the impact structure 1. Thus, when the airbag 23 is inflated the impact structure 1 is ejected to the extended position by the air inflated to the airbag 23. The impact structure 1 may be moved back to the retracted position only if the airbag 23 is deflated. This embodiment comprises also the latch 16 and the corresponding recesses 17 on the rails 11 a and 11 b, since the impact load may be high enough to puncture the airbag 23.

In an alternative embodiment, not illustrated in figures, instead of being ejectable as a response to a signal indicating a probable approaching impact, the impact structure 1 may be pushed out and locked to a slightly extended position when the motor is started, for instance by rotating the key in an ignition switch or by a remote control. In other words, when a driver rotates the key or pushes a button, suitable biasing means are released such that the impact structure 1 is pushed out to a position in which a distance between the rear part of the vehicle 2 and a surface of the bumper portion 4 facing away from the rear part of the vehicle 2 is increased slightly, suitably 5 cm. After the impact structure 1 is pushed out to such a slightly extended position, the locking means prevents the impact structure 1 from being moved to the retracted position. Suitably, the impact structure 1 is pushed out such that the hinged latch 16 of the rails 11 a will engage with a desired recess 17 of the rails 11 b, for instance a recess 17 which is adjacent to the retracted position. Suitably, the impact structure 1 is provided with an upper cover, which covers at least the part of the impact structure 1 extending between the rear part of the vehicle 2 and the impact receiving portion 4 when the impact structure 1 is in the slightly extended position. Thus, the articles in the storage portion 3 are protected against precipitation such as rain or the like. An impact structure 1 as described above increases passenger safety, since the distance between the impact receiving portion 4 and the passengers is increased.

In a still alternative embodiment of the invention, the impact structure 1 may be pushed out to a slightly extended position when the motor is started, as is described above, as well as be ejected further to a more extended position as a response to a signal indicating a probable approaching impact.

In an alternative embodiment, not illustrated in figures, the invention relates to an impact structure, which does not necessarily have to be movable between a retracted and an extended position when the impact structure is arranged in a vehicle, and a vehicle comprising such an impact structure. The impact structure according to this embodiment comprises a storage portion and impact receiving portion and is similar to the embodiment in figures 1 and 2 apart from the feature of not necessarily being movable when the impact structure is arranged in the vehicle. Before the impact structure is arranged in the vehicle a battery unit or a range extender may be positioned in the storage portion. Thereafter, the impact structure may be fixedly arranged in the vehicle such that a section of the storage portion is in contact with a load bearing section of the vehicle. When an impact occurs, the impact structure will transfer the impact load to the load bearing section of the vehicle similarly to the embodiment of the impact structure 1 in figures 1 and 2. Hence, the battery unit or the range extender positioned within the impact structure will be protected by the impact structure during the impact.

Even though the invention has been described with reference to specific exemplifying embodiments thereof, many different alterations, modifications and the like will become apparent for those skilled in the art. For example, instead of being arranged just at the rear part of the vehicle 2, the impact structure 1 can also, or alternatively, be arranged at the front part of the vehicle 2 if it is desirable. Also, the embodiment described referring to figures 1 and 2 may comprise rails 11 a, 11 b comprising the latch 16 and the corresponding recesses 17. In addition, the embodiment described referring to figures 1 and 2 may comprise biasing means, such as mechanical spring or a gas spring. Especially gas springs are advantageous, since a gas spring facilitates intentional movements of the impact structure 1 when a user is moving the impact structure 1 between a retracted and an extended position.

In an alternative embodiment of the invention, the impact structure 1 is a part of a vehicle 2. In other aspects the features of the impact structure 1 are similar to those discussed above.

Even if the impact structure 1 according to the invention is described in combination with a relatively small vehicle 2, the impact structure 1 may be adapted for other types of vehicles, such as a normal sized car.

The number of sensors 12 is not limited to one; instead the number of sensors 12 may be arbitrary. Further, instead of being arranged on the impact structure 1, the sensor 12 or sensors may be arranged on a rear part of the vehicle 2. In such a case, necessary connections are arranged between the sensor 12 or sensors and the drive device. The connections between the sensor 12 or sensors and the drive device may also be wireless.

In an alternative embodiment, the impact structure 1 is provided with locking means in form of a ratchet. The ratchet comprises a gear and a pawl. The gear is arranged below the bottom member 5 and the pawl is arranged on one of the rear side parts of the vehicle 2. The pawl engages with teeth of the gear and hinders the gear from rotating to a direction which corresponds to movement of the impact structure 1 from an extended position to a retracted position. For being able to manually move the impact structure 1 from an extended position to a retracted position, the impact structure 1 is provided with means for releasing the pawl from engagement with a tooth of the gear. Suitably, the handle may comprise a member for controlling the means for releasing the pawl. Alternatively, each of the rear side parts of the vehicle 2 may be provided with a pawl. In such a case the releasing means may be connected to both pawls and to the handle.

Even if both of the rails 11 a of the impact structure 1 are described above as comprising a latch, alternatively, only one of the rails 11 a may comprise a latch. Generally, the locking means may be one or several.

Instead of being a combination of a latch 16 and recesses 17 or a pawl and a gear, the locking means may comprise any other suitable locking devices.

In an alternative embodiment, instead of a handle for moving the impact structure 1 for allowing a user to reach the storage portion 3, the vehicle 2 may be provided with other means for moving the impact structure 1, such as a control member at the control area, or the movement of the impact structure 1 may be remotely controlled. Suitably, means for controlling the means for releasing the latch 16, pawl, or other locking means, is also controlled by such a control member, or a remote control.

If it is desirable, the impact structure 1 may be limited to be ejected only when the vehicle 2 is moving with a velocity which is equal to or larger than a suitable limit value, suitably 1 m/s.

Additionally, variations to the disclosed embodiments can be understood and effected by the skilled addressee in practicing the claimed invention, from a study of the drawings, the disclosure, and the appended claims. In the claims, the word "comprising" does not exclude other elements or steps, and the indefinite article "a" or "an" does not exclude a plurality. A single unit may fulfil the functions of several items recited in the claims.

## Claims

1. Impact structure (1) adapted to be arranged in a vehicle (2) to take up an impact load, the impact structure (1) comprising an impact receiving portion (4) and a storage portion (3), wherein the impact structure (1) is movable between two positions, a retracted position and an extended position, in relation to a body structure of the vehicle (2), wherein the impact structure (1) have guiding means (11a) for cooperation with guiding means (11 b) on the body structure of the vehicle (2) for guiding the impact structure (1) between said two positions,
wherein the impact structure (1) is lockable in said two positions,
wherein, when the impact structure (1) is in the retracted position, said storage portion (3) is adapted to transfer an impact load directly to a load bearing section (7) of the body structure of the vehicle, and
wherein, when in the extended position, the impact structure (1) is locked in that position by locking means (16, 17, 20), **characterized in that** impact energy absorbing means (13, 16, 17, 20) comprising said locking means (16, 17, 20) are provided , wherein the locking means (16, 17, 20) are deformable under an impact load, over a predetermined value, to allow the impact structure (1) to move from the extended position towards the retracted position under impact energy absorption, wherein the locking means (16, 17, 20) cooperate with the guiding means (11a, 11b) and the guiding means (11a, 11b) transfer the impact load to the load bearing section (7) of the body structure of the vehicle (2) during movement of the impact structure (1) from the extended position towards the retracted position, and when having reached the retracted position said storage portion (3) is adapted to transfer the impact load directly to the load bearing section (7) of the body structure of the vehicle (2).

2. Impact structure (1) according to claim 1, wherein said locking means comprises a matching pair of a latch (16) and a recess (17), which are in engagement with each other for preventing the impact structure (1) from moving to a retracted position.

3. Impact structure (1) according to any one of claims 1-2, wherein said impact structure (1) is ejectable to the extended position in response to a signal indicating a probable approaching impact with the vehicle (2) or the impact structure (1).

4. Impact structure (1) according to anyone of claims 1-3, wherein said transferring of the impact load to the load bearing section comprises that said impact energy absorbing means (13, 16, 17, 20) is adapted to transfer directly or via the guiding means (11 a, 11 b) said impact load to a floor of the vehicle.

5. Impact structure (1) according to anyone of claims 1-4, wherein said guiding means (11a, 11b) comprises a pair of guiding means (11a) on the impact structure (1) to matche corresponding guiding means (11b) on the vehicle (2), for moving said impact structure (1) between said retracted and extended position.

6. Impact structure (1) according to anyone of claims 1-5, wherein said storage portion (3) of said impact structure (1) is at least partly arrangeable between two wheels (9) of the vehicle (2).

7. Impact structure (1) according to claim 3 or anyone of claims 4-6 when dependent on claim 3, wherein said impact structure (1) further comprises a drive device (13; 23) for ejecting said impact structure (1) to said extended position in response to said signal indicating a probable approaching impact.

8. Impact structure (1) according to claim 7, wherein said drive device (13, 23) comprises
biasing means (13), such as a gas spring (13),
a pyrotechnical inflator,
an airbag (23),
or a combination thereof.

9. Impact structure (1) according to anyone of claims 1-8, wherein said impact receiving portion (4) and said storage portion (3) of the impact structure (1) are made of a sandwich composite.

10. Impact structure (1) according to claim 3 or anyone of claims 4-9 when dependent on claim 3, wherein said impact structure (1) is further connected with at least one seat belt (21) of the vehicle (2) such that a retractor of the seat belt (21) is connected to the impact structure (1), wherein said seat belt (21) is retracted into the retractor when the impact structure (1) is moved to the extended position as a response to said signal indicating a probable approaching impact.

11. Impact structure (1) according to any one of claims 1-10, wherein the impact structure (1) is manually movable between said two positions and lockable in said two positions.

12. A vehicle (2) comprising an impact structure (1) according to any one of claims 1-11.

## Patentansprüche

1. Aufprallstruktur (1), die dazu eingerichtet ist, in einem Fahrzeug (2) eine Aufpralllast aufzunehmen, wobei die Aufprallstruktur (1) einen Aufprallaufnahmeabschnitt (4) und einen Speicherabschnitt (3) umfasst, wobei die Aufprallstruktur (1) zwischen zwei Positionen, einer eingefahrenen Position und einer ausgefahrenen Position, in Bezug auf eine Karosseriestruktur des Fahrzeugs (2) bewegbar ist, wobei die Aufprallstruktur (1) Führungsmittel (11a) zum Zusammenwirken mit Führungsmitteln (11 b) an der Karosseriestruktur des Fahrzeugs (2) zum Führen der Aufprallstruktur (1) zwischen den zwei Positionen aufweist,
wobei die Aufprallstruktur (1) in den zwei Positionen verriegelbar ist,
wobei, wenn sich die Aufprallstruktur (1) in der eingefahrenen Position befindet, der Speicherabschnitt (3) dazu eingerichtet ist, eine Aufpralllast direkt auf einen Lasttrageabschnitt (7) der Karosseriestruktur des Fahrzeugs zu übertragen, und
wobei die Aufprallstruktur (1), wenn sie sich in der ausgefahrenen Position befindet, in dieser Position durch Verriegelungsmittel (16, 17, 20) verriegelt ist,
**dadurch gekennzeichnet, dass**
Aufprallenergie absorbierende Mittel (13, 16, 17, 20), welche die Verriegelungsmittel (16, 17, 20) umfassen, vorgesehen sind, wobei die Verriegelungsmittel (16, 17, 20) unter einer Aufpralllast, die über einem vorbestimmten Wert liegt, verformbar sind, um zu ermöglichen, dass sich die Aufprallstruktur (1) unter Absorption von Aufprallenergie von der ausgefahrenen Position in Richtung der eingefahrenen Position bewegt, wobei die Verriegelungsmittel (16, 17, 20) mit den Führungsmitteln (11 a, 11 b) zusammenwirken und die Führungsmittel (11 a, 11 b) während der Bewegung der Aufprallstruktur (1) von der ausgefahrenen Position in Richtung der eingefahrenen Position die Aufpralllast auf den Lasttrageabschnitt (7) der Karosseriestruktur des Fahrzeugs (2) übertragen, und wenn die eingefahrene Position erreicht worden ist, der Speicherabschnitt (3) dazu eingerichtet ist, die Aufpralllast direkt auf den Lasttrageabschnitt (7) der Karosseriestruktur des Fahrzeugs (2) zu übertragen.

2. Aufprallstruktur (1) nach Anspruch 1, wobei die Verriegelungsmittel ein zusammenpassendes Paar aus einer Klinke (16) und einer Vertiefung (17) umfassen, welche miteinander im Eingriff stehen, um zu verhindern, dass sich die Aufprallstruktur (1) in eine eingefahrene Position bewegt.

3. Aufprallstruktur (1) nach einem der Ansprüche 1 - 2, wobei die Aufprallstruktur (1) in Reaktion auf ein Signal, das einen wahrscheinlichen bevorstehenden Zusammenprall mit dem Fahrzeug (2) oder der Aufprallstruktur (1) anzeigt, in die ausgefahrene Position ausstoßbar ist.

4. Aufprallstruktur (1) nach einem der Ansprüche 1 - 3, wobei das Übertragen der Aufpralllast auf den Lasttrageabschnitt umfasst, dass die Aufprallenergie absorbierenden Mittel (13, 16, 17, 20) dazu eingerichtet sind, die Aufpralllast direkt oder über die Führungsmittel (11 a, 11 b) auf einen Boden des Fahrzeugs zu übertragen.

5. Aufprallstruktur (1) nach einem der Ansprüche 1 - 4, wobei die Führungsmittel (11 a, 11 b) ein Paar von Führungsmitteln (11 a) an der Aufprallstruktur (1) umfasst, das mit entsprechenden Führungsmitteln (11 b) an dem Fahrzeug (2) zusammenzupassen ist, zum Bewegen der Aufprallstruktur (1) zwischen der eingefahrenen und der ausgefahrenen Position.

6. Aufprallstruktur (1) nach einem der Ansprüche 1 - 5, wobei die Speicherposition (3) der Aufprallstruktur (1) wenigstens teilweise zwischen zwei Rädern (9) des Fahrzeugs (2) angeordnet werden kann.

7. Aufprallstruktur (1) nach Anspruch 3 oder einem der Ansprüche 4 - 6, wenn abhängig von Anspruch 3, wobei die Aufprallstruktur (1) ferner eine Antriebsvorrichtung (13, 23) zum Ausstoßen der Aufprallstruktur (1) in die ausgefahrene Position in Reaktion auf das Signal, das einen wahrscheinlichen bevorstehenden Aufprall anzeigt, umfasst.

8. Aufprallstruktur (1) nach Anspruch 7, wobei die Antriebsvorrichtung (13, 23) umfasst:
Vorspannmittel (13), wie etwa eine Gasfeder (13),
einen pyrotechnischen Gasgenerator,
einen Airbag (23)
oder eine Kombination davon.

9. Aufprallstruktur (1) nach einem der Ansprüche 1 - 8, wobei der Aufprallaufnahmeabschnitt (4) und der Speicherabschnitt (3) der Aufprallstruktur (1) aus einem Sandwich-Verbundmaterial hergestellt sind.

10. Aufprallstruktur (1) nach Anspruch 3 oder einem der Ansprüche 4 - 9, wenn abhängig von Anspruch 3, wobei die Aufprallstruktur (1) ferner mit mindestens einem Sitzgurt (21) des Fahrzeugs (2) verbunden ist, so dass eine Aufrollvorrichtung des Sitzgurtes (21) mit der Aufprallstruktur (1) verbunden ist, wobei der Sitzgurt (21) in die Aufrollvorrichtung zurückgezogen wird, wenn die Aufprallstruktur (1) in Reaktion auf das Signal, das einen wahrscheinlichen bevorstehenden Aufprall anzeigt, in die ausgefahrene Position bewegt wird.

11. Aufprallstruktur (1) nach einem der Ansprüche 1 - 10, wobei die Aufprallstruktur (1) manuell zwischen den zwei Positionen bewegbar und in den zwei Positionen verriegelbar ist.

12. Fahrzeug (2), welches eine Aufprallstruktur (1) nach einem der Ansprüche 1 - 11 umfasst.

## Revendications

1. Structure d'impact (1) adaptée pour être agencée dans un véhicule (2) pour absorber une charge d'impact, la structure d'impact (1) comprenant une partie recevant l'impact (4) et une partie de stockage (3), dans laquelle la structure d'impact (1) est mobile entre deux positions, une position rétractée et une position étendue en rapport avec une structure de carrosserie du véhicule (2), dans laquelle la structure d'impact (1) possède des moyens de guidage (11 a) pour coopérer avec des moyens de guidage (11 b) sur la structure de carrosserie (2) pour guider la structure d'impact (1) entre lesdites deux positions,
dans laquelle la structure d'impact (1) peut être bloquée dans lesdites deux positions,
dans laquelle, lorsque la structure d'impact (1) est dans la position rétractée, ladite position de stockage (3) est adaptée pour transférer une charge d'impact directement à une section supportant la charge (7) de la structure de carrosserie du véhicule, et
dans laquelle, lorsqu'elle est dans la position étendue, la structure d'impact (1) est bloquée dans cette position par les moyens de blocage (16, 17, 20),
**caractérisée en ce que**
des moyens absorbant l'énergie d'impact (13, 16, 17, 20) comprenant lesdits moyens de blocage (16, 17, 20) sont prévus, dans laquelle les moyens de blocage (16, 17, 20) peuvent être déformés sous une charge d'impact, à une valeur prédéterminée, pour permettre à la structure d'impact (1) de se déplacer de la position étendue à la position rétractée sous l'absorption de l'énergie d'impact, dans laquelle les moyens de blocage (16, 17, 20) coopèrent avec les moyens de guidage (11 a, 11 b) et les moyens de guidage (11 a, 11 b) transfèrent la charge d'impact à la section supportant la charge (7) de la structure de carrosserie du véhicule (2) pendant le déplacement de la structure d'impact (1) de la position étendue à la position rétractée et lorsqu'ayant atteint la position rétractée ladite partie de stockage (3) est adaptée pour transférer la charge d'impact directement à la section supportant la charge (7) de la structure de carrosserie du véhicule (2).

2. Structure d'impact (1) selon la revendication 1, dans laquelle ledit moyen de blocage comprend une paire correspondante d'un verrou (16) et d'un chambrage (17) qui sont en prise l'un avec l'autre pour éviter à la structure d'impact (1) de se déplacer à une position rétractée.

3. Structure d'impact (1) selon l'une quelconque des revendications 1 - 2, dans laquelle ladite structure d'impact (1) peut être éjectée à la position étendue en réaction à un signal indiquant un impact approchant probable avec le véhicule (2) ou la structure d'impact (1).

4. Structure d'impact (1) selon l'une quelconque des revendications 1 - 3, dans laquelle ledit transfert de la charge d'impact à la section supportant la charge comprend le fait que ledit moyen d'absorption d'énergie d'impact (13, 16, 17, 20) est adapté pour tarnsférer directement ou via les moyens de guidage (11 a, 11 b) ladite charge d'impact à un plancher du véhicule.

5. Structure d'impact (1) selon l'une quelconque des revendications 1 - 4, dans laquelle lesdits moyens de guidage (11 a, 11 b) comprennent une paire de moyens de guidage (11 a) sur la structure d'impact (1) pour s'adapter aux moyens de guidage (11 b) sur le véhicule (2) pour déplacer ladite structure d'impact (1) entre ladite position rétractée et ladite position étendue.

6. Structure d'impact (1) selon l'une quelconque des revendications 1 - 5, dans laquelle ladite partie de stockage (3) de ladite structure d'impact (1) peut être au moins en partie configurée entre deux roues (9) du véhicule (2).

7. Structure d'impact (1) selon la revendication 3 ou l'une quelconque des revendications 4 - 6, lorsqu'elles sont dépendantes de la revendication 3, dans laquelle ladite structure d'impact (1) comprend en plus un dispositif de commande (13, 23) pour éjecter ladite structure d'impact (1) dans ladite position étendue en réaction audit signal indiquant un impact approchant probable.

8. Structure d'impact (1) selon la revendication 7, dans laquelle ledit dispositif de commande (13, 23) comprend
un moyen d'inclinaison (13) comme un ressort à gaz (13),
un gonfleur pyrotechnique,
un coussin d'air (23)
ou une combinaison de ceux-ci.

9. Structure d'impact (1) selon l'une quelconque des revendications 1 - 8, dans laquelle ladite partie recevant l'impact (4) et ladite partie de stockage (3) de la structure d'impact (1) sont faites en un matériau composite sandwich.

10. Structure d'impact (1) selon la revendication 3 ou l'une quelconque des revendications 4 - 9, lorsqu'elles sont dépendantes de la revendication 3, dans laquelle ladite structure d'impact (1) est en plus raccordée avec au moins une ceinture de siège (21) du véhicule (2) de sorte qu'un enrouleur de la ceinture de siège (21) est raccordé à la structure d'impact (1), dans laquelle ladite ceinture de siège (21) est rétractée dans l'enrouleur lorsque la structure d'impact (1) est déplacée à la position étendue en réaction audit signal indiquant un impact approchant probable.

11. Structure d'impact (1) selon l'une quelconque des revendications 1 - 10, dans laquelle la structure d'impact (1) est déplaçable manuellement entre lesdites deux positions et blocable dans lesdites deux positions.

12. Véhicule (2) comprenant une structure d'impact (1) selon l'une quelconque des revendications 1 - 11.
